Europäisches Patentamt

European Patent Office

Office européen des brevets

(11) Veröffentlichungsnummer: **0 224 656 B1**

(19)

(12) # EUROPÄISCHE PATENTSCHRIFT

(45) Veröffentlichungstag der Patentschrift: **30.12.92**

(51) Int. Cl.$^5$: **G06F 7/50**

(21) Anmeldenummer: **86111732.3**

(22) Anmeldetag: **25.08.86**

(54) **Mehrstelliger Carry-Ripple-Addierer in CMOS-Technik mit zwei Typen von Addiererzellen.**

(30) Priorität: **30.09.85 DE 3534863**

(43) Veröffentlichungstag der Anmeldung:
**10.06.87 Patentblatt 87/24**

(45) Bekanntmachung des Hinweises auf die
Patenterteilung:
**30.12.92 Patentblatt 92/53**

(84) Benannte Vertragsstaaten:
**AT DE FR GB IT NL**

(56) Entgegenhaltungen:
**EP-A- 0 143 456**
**EP-A- 0 155 019**

**IBM TECHNICAL DISCLOSURE BULLETIN,
Band 25, Nr. 4, September 1982, Seiten
1818-1819, New York, US; R.A. BECHADE et
al.: "Inverted carry propagation chain"**

**SIEMENS FORSCH.- UND ENTWICKL.- BER.,
Band 5, Nr. 6, Dezember 1976, Seiten
324-326, Springer-Verlag, Berlin, DE; D. EICH-
RODT: "Rewarding application of transmission gates in MOS-LSI circuits"**

(73) Patentinhaber: **SIEMENS AKTIENGESELL-
SCHAFT
Wittelsbacherplatz 2
W-8000 München 2(DE)**

(72) Erfinder: **Knauer, Karl, Dr.
Nockherweg 21
W-8018 Grafing(DE)**

EP 0 224 656 B1

## Beschreibung

Die vorliegende Erfindung betrifft einen mehrstelligen Carry-Ripple-Addierer in CMOS-Technik mit zwei Typen von Addiererzellen, wobei die Addiererzellen eines ersten Typs jeweils an einer Eingangsklemme für ein Übertragseingangssignal mit einem invertierten Übertragseingangssignal und die Addiererzellen eines zweiten Typs jeweils an einer Eingangsklemme für ein Übertragseingangssignal mit einem nichtinvertierten Übertragseingangssignal beaufschlagt werden, wobei jeweils von den Addiererzellen des ersten Typs an einer Ausgangsklemme für ein Übertragsausgangssignal ein nichtinvertiertes Übertragsausgangssignal und von den Addiererzellen des zweiten Typs an einer Ausgangsklemme für ein Übertragsausgangssignal ein invertiertes Übertragsausgangssignal ausgegeben wird, wobei jeder Typ der Addiererzellen eine Gatteranordnung für zwei Variable, zur Bewertung eines Übertragseingangssignals zur Summenbildung und zur Übertragsbildung aufweist und wobei jeweils eine Eingangsklemme für eine der zwei Variablen vorgesehen ist.

Bei einer großen Anzahl von digitalen Logikschaltungen, beispielsweise digitalen Filtern, Signalprozessoren und Mikroprozessoren werden Addierer benötigt. Das einfachste Prinzip für einen solchen Addierer ist das "Ripple-Carry"-Verfahren, bei dem ein entstehender Übertrag (Carry) seriell von einer Addiererzelle für das jeweils niederwertige Bit zu einer Addiererzelle für das jeweils höherwertige Bit übertragen wird. Die Durchlaufzeit des Übertragssignals bestimmt dabei im wesentlichen die Additionszeit. Auch aufwendigere Addiererprinzipien, wie z. B. das bekannte "Carry-Loock-Ahead"-Verfahren, bauen auf Elementen des "Ripple-Carry"-Verfahrens auf.

Addiererzellen der eingangs genannten Art sind beispielsweise aus H.W. Weiß, K. Horninger: "Integrierte MOS-Schaltungen", Springer-Verlag Berlin-Heidelberg-New York (1982), S. 188 bis 194 bekannt. Den bekannten Addiererzellen haftet der Nachteil an, daß in dem Übertragspfad, der zeitkritisch für die gesamte Rechenzeit eines mit derartigen Addiererzellen aufgebauten Rechenwerks ist, entweder eine verhältnismäßig große Anzahl von Gattern eingefügt ist oder daß die in den Übertragspfad eingefügten Gatter Bestandteile von Kombinationsgattern sind. Im ersteren Falle wirkt sich die Anzahl von in Reihe geschalteten Gattern ungünstig auf die Durchlaufzeit von Übertragssignalen aus. Im zweiten Fall wirkt sich unter Umständen zusätzlich die Tatsache ungünstig aus, daß die Aufladung der Kapazität des Übertragsausgangs aufgrund der relativen Hochohmigkeit der als Bestandteile von Kombinationsgattern ausgebildeten Gatter nicht mit der erforderlichen Flankensteilheit erfolgt.

In der europäischen Veröffentlichung EP-A-155019, ist eine Addierzelle beschrieben die ein NAND und ein NOR Gatter aufweist, deren Ausgänge Transfertransistoren steuern um die Summe und den Ausgangsübertrag zu bilden. Jedoch benötigt auch diese Schaltung das invertierte Eingangsübertragssignal und dadurch auch zusätzliche Gatter um das Eingangsübertragssignal zu invertieren und um das Ausgangsübertragssignal zu erzeugen.

Der vorliegenden Erfindung liegt die Aufgabe zugrunde, einen mehrstelligen Carry-Ripple-Addierer der eingangs genannten Art zu schaffen, bei dem die Nachteile bekannter Addierer bezüglich des Übertragspfades wirksam vermieden werden und bei dem außerdem der Transistoraufwand für die Gatteranordnungen wesentlich reduziert ist, so daß sich insgesamt eine Flächenersparnis ergibt.

Die der vorliegenden Erfindung zugrunde liegende Aufgabe wird durch einen mehrstelligen Carry-Ripple-Addierer der eingangs genannten Art und gemäß dem Oberbegriff des Patentanspruchs 1 oder dem Obergriff des Patentanspruchs 2 gelöst, welcher Carry-Ripple-Addierer durch die in dem kennzeichnenden Teil des Patentanspruchs 1 oder in dem kennzeichnenden Teil des Patentanspruchs 2 angegebenen Merkmale charakterisiert ist.

Im folgenden wird die Erfindung anhand einer bevorzugte Ausführungsbeispiele für Addiererzellen eines ersten Typs und Addiererzellen eines zweiten Typs betreffenden Figur im einzelnen beschrieben.

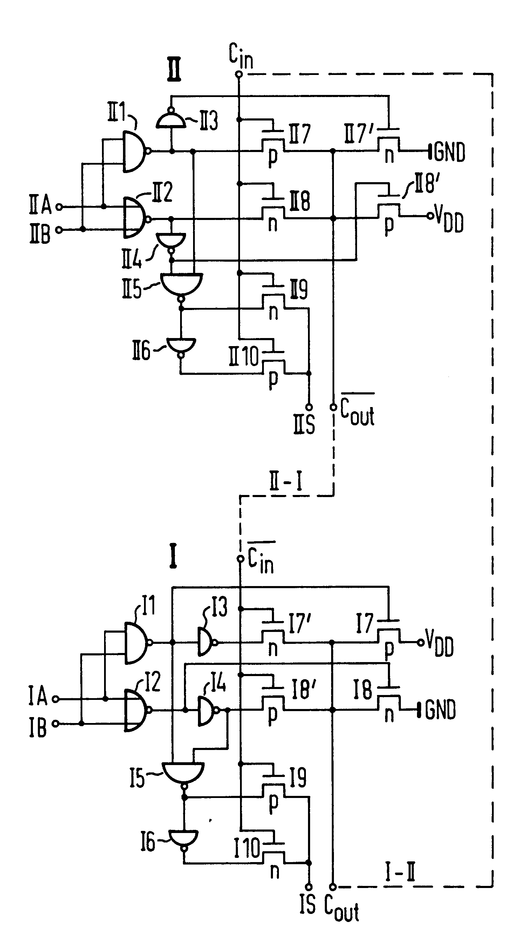

Wie die Figur zeigt, sind zwei Typen von Addiererzellen vorgesehen, wobei die Addiererzellen eines ersten Typs I jeweils an einer Eingangsklemme für ein Übertragseingangssignal $\overline{C_{in}}$ mit einem invertierten Übertragseingangssignal und die Addiererzellen eines zweiten Typs II jeweils an einer Eingangsklemme für ein Übertragseingangssignal $C_{in}$ mit einem nichtinvertierten Übertragseingangssignal beaufschlagt werden. Von den Addiererzellen des ersten Typs I wird jeweils an einer Ausgangsklemme für ein Übertragsausgangssignal $C_{out}$ ein nichtinvertiertes Übertragsausgangssignal und von den Addiererzellen des zweiten Typs II an einer Ausgangsklemme für ein Übertragsausgangssignal $\overline{C_{out}}$ ein invertiertes Übertragsausgangssignal ausgegeben. Jeder Typ der Addiererzellen weist eine Gatteranordnung für zwei Variable A, B, zur Bewertung eines Übertragseingangssignals zur Summenbildung und zur Übertragsbildung auf. Jede der Addiererzellentypen weist jeweils eine Eingangsklemme für eine der zwei Variablen A, B auf. Die Gatteranordnung ist derart gebildet, daß das Aufladen der Kapazität des Übertragsausgangs entweder über nur einen als Transfergatter wirkenden Transfertransistor II 7' oder II8' oder aber über die Serienschaltung von nur zwei Transistoren erfolgt, von denen der eine jeweils in Gattern II1, II2 (bzw. I3, I4) enthalten ist und der zweite jeweils durch ein Transfergatter II7 oder II8 gebildet wird. Durch die verschiedenen Übertragungswege kann sowohl der Binärwert "0" als auch der Binärwert "1" ohne zusätzliche Einsatzspannungsverluste übertragen werden. Die Transfertransistoren 7, 7', 8, 8' sind vorteilhafterweise nicht Bestandteil eines Kombinationsgatters innerhalb der Gatteranordnung, so daß die Transfertransistoren 7, 7', 8, 8', die mit ihren Source/Drain-Strecken in den zeitkritischen Übertragspfad eingefügt sind, ohne Einschränkung durch die Layout-Geometrie wesentlich niederohmiger als die übrigen Transistoren der gesamten Gatteranordnung auslegbar sind.

In der Addiererzelle des ersten Typs I ist eine Gatteranordnung vorgesehen, bei der jede der beiden Eingangsklemmen für die zwei Variablen IA, IB jeweils mit einem Eingang eines ersten NAND-Gatters I1 und eines NOR-Gatters I2 verbunden ist. Der Ausgang des ersten NAND-Gatters I1 ist mit dem Eingang eines ersten Inverters I3, einem ersten Eingang eines zweiten NAND-Gatters I5 und der Gate-Elektrode eines ersten als p-Kanal-FET ausgeführten Transfertransistors I7 verbunden. Der Ausgang des NOR-Gatters I2 ist mit dem Eingang eines zweiten Inverters I4 und der Gate-Elektrode eines zweiten als n-Kanal-FET ausgeführten Transfertransistors I8 verbunden. Der Ausgang des ersten Inverters I3 ist mit der Source-Elektrode eines dritten als n-Kanal-FET ausgeführten Transfertransistors I7' verbunden. Der Ausgang des zweiten Inverters I4 ist mit der Source-Elektrode eines vierten als p-Kanal-FET ausgeführten Transfertransistors I8' und einem zweiten Eingang des zweiten NAND-Gatters I5 verbunden. Der Ausgang des zweiten NAND-Gatters I5 ist mit der Source-Elektrode eines fünften als p-Kanal-FET ausgeführten Transfertransistors I9 und dem Eingang eines dritten Inverters I6 verbunden. Der Ausgang des dritten Inverters I6 ist mit der Source-Elektrode eines sechsten als n-Kanal-FET ausgeführten Transfertransistors I10 verbunden. Die Source-Elektrode des ersten Transfertransistors I7 liegt auf Betriebsspannungspotential $V_{DD}$, und die Source-Elektrode des zweiten Transfertransistors I8 liegt auf Erdpotential GND. Die Drain-Elektroden des ersten, des zweiten, des dritten und des vierten Transfertransistors I7, I8, I7', I8' sind gemeinsam mit der Ausgangsklemme für das nichtinvertierte Übertragsausgangssignal $C_{out}$ verbunden. Die Drain-Elektroden des fünften und des sechsten Transfertransistors I9, I10 sind gemeinsam mit der Ausgangsklemme für das Summensignal IS verbunden. Die Gate-Elektroden des dritten, des vierten, des fünften und des sechsten Transfertransistors I7', I8', I9, I10 sind gemeinsam mit der Eingangsklemme für das invertierte Übertragseingangsignal $\overline{C_{in}}$ verbunden.

In der Addiererzelle des zweiten Typs II ist eine Gatteranordnung vorgesehen, bei der jede der beiden Eingangsklemmen für die zwei Variablen IIA, IIB jeweils mit einem Eingang eines ersten NAND-Gatters II1 und eines NOR-Gatters II2 verbunden ist. Der Ausgang des ersten NAND-Gatters II1 ist mit dem Eingang eines ersten Inverters II3, der Source-Elektrode eines ersten als p-Kanal-FET ausgeführten Transfertransistors II7 und einem ersten Eingang eines zweiten NAND-Gatters II5 verbunden. Der Ausgang des ersten Inverters II3 ist mit der Gate-Elektrode eines zweiten als n-Kanal-FET ausgeführten Transfertransistors II7' verbunden. Der Ausgang des NOR-Gatters II2 ist mit der Source-Elektrode eines dritten als n-Kanal-FET ausgeführten Transfertransistors II8 und dem Eingang eines zweiten Inverters II4 verbunden. Der Ausgang des zweiten Inverters II4 ist mit der Gate-Elektrode eines vierten als p-Kanal-FET ausgeführten Transfertransistors II8' und mit einem zweiten Eingang des zweiten NAND-Gatters II5 verbunden. Der Ausgang des zweiten NAND-Gatters II5 ist mit der Gate-Elektrode eines fünften als n-Kanal-FET ausgeführten Transfertransistors II9 und dem Eingang eines dritten Inverters II6 verbunden. Der Ausgang des dritten Inverters II6 ist mit der Source-Elektrode eines sechsten als p-Kanal-FET ausgeführten Transfertransistors II10 verbunden. Die Source-Elektrode des zweiten Transfertransistors II7' liegt auf Erdpotential GND, und die Source-Elektrode des vierten Transfertransistors II8' liegt auf Betriebsspannungspotential $V_{DD}$. Die Drain-Elektroden des ersten, des zweiten, des dritten und des vierten Transfertransistors II7, II7', II8, II8' sind gemeinsam mit der Ausgangsklemme für das invertierte Übertragsausgangssignal $\overline{C_{out}}$ verbunden. Die Drain-Elektroden des fünften und des sechsten Transfertransistors II9, II10 sind gemeinsam mit der Ausgangsklemme für das Summensignal IIS verbunden. Die Gate-Elektroden des ersten, des dritten, des fünften und des sechsten Transfertransistors II7, II8, II9, II10 sind gemeinsam mit der Eingangsklemme für das nichtinvertierte Übertragseingangsignal $C_{in}$ verbunden.

Die Addiererzellen des ersten Typs I sind vorzugsweise in den ungeradzahligen Stufen angeordnet, und die Addiererzellen des zweiten Typs II sind demzufolge in den geradzahligen Stufen angeordnet. Im übrigen ist vorgesehen, daß jeweils die Ausgangsklemme für das nichtinvertierte Übertragsausgangssignal $C_{out}$ einer Addiererzelle des ersten Typs I bzw. die Ausgangsklemme für das invertierte Übertragsausgangssignal $\overline{C_{out}}$ einer Addiererzelle des zweiten Typs II mit der Eingangsklemme für das nichtinvertierte Übertragseingangssignal $C_{in}$ der Addiererzelle der jeweils folgenden Stufe bzw. mit der Eingangsklemme für das inver-

tierte Übertragseingangssignal $\overline{C_{in}}$ der Addiererzelle der jeweils folgenden Stufe verbunden ist, vergl. die gestrichelt dargestellten Verbindungen I-II bzw. II-I.

Die beschriebenen Ausführungsbeispiele für die Addiererzellen des ersten Typs und des zweiten Typs benötigen jeweils nur 24 Transistoren. Dies bedeutet gegenüber dem Stand der Technik, bei dem z. B. zumindest 28 Transistoren benötigt werden, eine wesentliche Flächenersparnis. Darüber hinaus sind in den zeitkritischen Carry- oder Übertragspfad jeweils nur zwei Source/Drain-Strekken eingefügt, von denen eine ohne Rücksicht auf die Layout-Geometrie niederohmig gemacht werden kann.

Bezugszeichenliste

| | |
|---|---|
| $C_{in}$ | Übertragseingangssignal |
| $\overline{C_{in}}$ | invertiertes Übertragseingangssignal |
| $C_{out}$ | Übertragsausgangssignal |
| $\overline{C_{out}}$ | invertiertes Übertragsausgangssignal |
| GND | Erdpotential |
| $V_{DD}$ | Betriebsspannungspotential |
| IA, IB, IIA, IIB | Variable |
| I1, II1 | NAND-Gatter |
| I2, II2 | NOR-Gatter |
| I3, II3 | Inverter |
| I4, II4 | Inverter |
| I5, II5 | NAND-Gatter |
| I6, II6 | Inverter |
| I7, II7 | p-Kanal-Transfertransistor |
| I7', II7' | n-Kanal-Transfertransistor |
| I8, II8 | n-Kanal-Transfertransistor |
| I8', II8' | p-Kanal-Transfertransistor |
| I9, II10 | p-Kanal-Transfertransistor |
| I10, II9 | n-Kanal-Transfertransistor |
| IS, IIS | Summensignal |
| I, II | Stufe |

**Patentansprüche**

1. Schaltungsanordnung zum Aufbau von Carry-Ripple-Addierern mit

    a) einem NAND-Gatter I1 und einem NOR-Gatter I2, deren Eingänge durch die Summanden des Addierers gegeben sind, gekennzeichnet durch die folgenden Merkmalen:

    b) die Ausgangssignale dieser Gatter I1 bzw. I2 werden mit Hilfe zweier Inverter I3 bzw. I4 invertiert;

    c) mit Hilfe eines weiteren NAND-Gatters I5 wird das Ausgangssignal des ersten NAND-Gatters I1 mit dem Ausgangssignals des Inverters I4 verknüpft und anschließend mit Hilfe eines weiteren Inverters I6 invertiert;

    d) mit Hilfe je zweier Transfertransistoren vom n-kanal bzw. p-Kanal Typ I7', I8', I9 bzw. I10, deren Gate-Elektroden nur von dem invertierten Eingangsübertragssignal $\overline{C_{in}}$ angesteuert werden, wird ausgewählt, ob

      - das Ausgangsübertragssignal $C_{out}$ durch den Ausgang des Inverters I3 oder des Inverters I4 gegeben ist, und ob

      - das Summensignal des Addierers (IS) durch den Ausgang des NAND-Gatters I5 oder durch den Ausgang des Inverters I6 gegeben ist;

    e) dabei werden etwaige Einsatzspannungsverluste an den Ausgängen der Transfertransistoren I7' und I8' durch weitere Transfertransistoren I7 bzw. I8 ausgeglichen, deren Gate-Elektroden durch die Ausgangssignale der Gatter I1 bzw. I2 angesteuert werden, welche eingangsseitig mit der Versorgungsspannung (VDD) bzw. mit dem Null-Potential (GND) verbunden sind, und welche ausgangsseitig mit dem Ausgangsübertragssignal $C_{out}$ verbunden sind;

    f) die Transfertransistoren I7, I7', I8 und I8' nicht Bestandteil eines Kombinationsgatters innerhalb der Schaltungsanordnung sind.

2. Schaltungsanordnung zum Aufbau von Ripple-Carry-Addierern mit:

    a) einem NAND-Gatter II1 und einem NOR-Gatter II2, Eingänge durch die Summanden des Addieres gegeben sind, gekennzeichnet durch die folgenden Merkmalen:

    b) die Ausgangssignale dieser Gatter II1 bzw. II2 werden mit Hilfe zweier Inverter II3 bzw. II4 invertiert;

    c) das Ausgangssignal des Inverters II4 wird mit Hilfe eines weiteren NAND-Gatters II5 mit dem Ausgangssignal des ersten NAND-Gatters II1 verknüpft und anschließend mit Hilfe eines weiteren Inverters II6 invertiert;

    d) mit Hilfe je zweier Transfertransistoren vom p-Kanal bzw. n-Kanal Typ II7, II8, II9, II10, deren Gate-Elektroden nur von dem Eingangsübertragssignal $C_{in}$ angesteuert werden, wird ausgewählt, ob

      - das invertierte Ausgangsübertragssignal $\overline{C_{out}}$ durch das Ausgangssignal des ersten NAND-Gatters II1 oder durch das Ausgangssignal des NOR-Gatters II2 gegeben ist, und ob

      - das Summensignal (IIS) durch den Ausgang des NAND-Gatters II5 oder durch den Ausgang des Inverters II6 gegeben ist;

    e) dabei werden etwaige Einsatzspannungsverluste an den Ausgängen der Transfertransistoren II7 und II8 durch weitere Transfertransistoren II7' bzw. II8' ausgeglichen, deren Gate-Elektroden durch die Ausgangssignale der Gatter II3 bzw. II4 angesteuert werden, welche eingangsseitig mit dem Null-Potential (GND) bzw mit der Versorgungsspannung (VDD) verbunden sind, und welche ausgangsseitig mit dem Ausgangs-übertragssignal $\overline{C_{out}}$ verbunden sind;

f) die Transfertransistoren II7, II7', II8, II8' nicht Bestandteil eines Kombinationsgatters innerhalb der Schaltungsanordnung sind.

**Claims**

1. Circuit arrangement for constructing carry ripple adders having

a) a NAND gate I1 and a NOR gate I2, the inputs of which are formed by the summands of the adder, characterised by the following features:

b) the output signals of said gates I1 and I2 are inverted with the aid of two inverters I3 and I4 respectively;

c) with the aid of a further NAND gate I5 the output signal of the first NAND gate I1 is gated with the output signal of the inverter I4 and subsequently inverted with the aid of a further inverter I6;

d) it is selected, with the aid of in each case two transfer transistors of the n-channel and p-channel type I7', I8', I9 and I10 respectively, the gate electrodes of which are driven only by the inverted input carry signal $\overline{C_{in}}$, whether

- the output carry signal $C_{out}$ is formed by the output of the inverter I3 or of the inverter I4, and whether
- the sum signal of the adder (IS) is formed by the output of the NAND gate I5 or by the output of the inverter I6;

e) during this process any threshold voltage losses at the outputs of the transfer transistors I7' and I8' are compensated by further transfer transistors I7 and I8 respectively, the gate electrodes of which are driven by the output signals of the gates I1 and I2 respectively, which are connected on the input side to the supply voltage (VDD) and to the zero potential (GND) respectively, and which are connected on the output side to the output carry signal $C_{out}$;

f) the transfer transistors I7, I7', I8 and I8' are not part of a combination gate within the circuit arrangement.

2. Circuit arrangement for constructing carry ripple adders having

a) a NAND gate II1 and a NOR gate II2, the inputs of which are formed by the summands of the adder, characterised by the following features:

b) the output signals of said gates II1 and II2 are inverted with the aid of two inverters II3 and II4 respectively;

c) with the aid of a further NAND gate II5 the output signal of the inverter II4 is gated with the output signal of the first NAND gate II1 and subsequently inverted with the aid of a further inverter II6;

d) it is selected, with the aid of in each case two transfer transistors of the p-channel and n-channel type II7, II8, II9, II10 respectively, the gate electrodes of which are driven only by the input carry signal $C_{in}$, whether

- the inverted output carry signal $\overline{C_{out}}$ is formed by the output signal of the first NAND gate II1 or by the output signal of the NOR gate II2, and whether
- the sum signal (IIS) is formed by the output of the NAND gate II5 or by the output of the inverter II6;

e) during this process any threshold voltage losses at the outputs of the transfer transistors II7 and II8 are compensated by further transfer transistors II7' and II8' respectively, the gate electrodes of which are driven by the output signals of the gates II3 and II4 respectively, which are connected on the input side to the zero potential (GND) and to the supply voltage (VDD) respectively, and which are connected on the output side to the output carry signal $\overline{C_{out}}$;

f) the transfer transistors II7, II7', II8, II8' are not part of a combination gate within the circuit arrangement.

**Revendications**

1. Montage pour réaliser des additionneurs Carry-Ripple comportant

a) une porte NON-ET I1 et une porte NON-OU I2, dont les entrées sont formées par les entrées de nombres à additionner de l'additionneur,

caractérisé par les particularités suivantes :

b) les signaux de sortie de ces portes I1 et I2 sont inversés à l'aide de deux inverseurs I3 et I4;

c) à l'aide d'une autre porte NON-ET I5, le signal de sortie de la première porte NON-ET I1 est combiné au signal de sortie de l'inverseur I4 et ensuite est inversé à l'aide d'un autre inverseur I6;

d) une sélection est exécutée à l'aide respectivement de deux transistors de transfert du type à canal n et à canal p I7', I8', I9 et I10, dont les électrodes de grille sont commandées uniquement par le signal de report d'entrée inversé $\overline{C_{IN}}$, pour déterminer si

- le signal de report de sortie $C_{out}$ est délivré par la sortie de l'inverseur I3 ou de l'inverseur I4, et si
- le signal somme de l'additionneur (IS) est délivré par la sortie de la porte NON-ET I5 ou par la sortie de l'inverseur I6;

e) d'éventuelles réductions de la tension de claquage au niveau des sorties des transistors de transfert I7' et I8' sont compensées par d'autres transistors de transfert I7 et I8, dont les électrodes de grille sont commandées par les signaux de sortie des portes I1 ou I2, qui reçoivent à leurs entrées la tension d'alimentation (VDD) et le potentiel nul (GND) et qui sont raccordées, côté sortie, au signal de report de sortie $C_{out}$;

f) des transistors de transfert I7, I7', I8 et I8' ne font pas partie d'une porte combinatoire à l'intérieur du montage.

2. Montage pour réaliser des additionneurs Ripple-Carry, comportant

a) une porte NON-ET II1 et une porte NON-OU II2 dont les entrées sont formées par les entrées des nombres à additionner de l'additionneur,

caractérisé par les particularités suivantes:

b) les signaux de sortie de ces portes II1 ou II2 sont inversés au moyen de deux inverseurs II3 et II4;

c) le signal de sortie de l'inverseur II4 est combiné, au moyen d'une autre porte NON-ET II5, au signal de sortie de la première porte NON-ET II1 et ensuite est inversé à l'aide d'un autre inverseur II6;

d) une sélection est faite à l'aide de deux transistors respectifs de transfert du type à canal p et à canal n II7, II8, II9, II10, dont les électrodes de grille sont commandées uniquement par le signal de report d'entrée $C_{in}$, pour savoir si

- le signal de report de sortie inversé $\overline{C_{out}}$ est formé par le signal de sortie de la première porte NON-ET II1 ou par le signal de sortie de la porte NON-OU II2, et si
- le signal somme IIS est délivré par la sortie de la porte NON-ET II5 ou par la sortie de l'inverseur II6;

e) d'éventuelles réductions de la tension de déclenchement au niveau des sorties des transistors de transfert II7 et II8 étant compensées par d'autres transistors de transfert II7' et II8', dont les électrodes de grille sont commandées par les signaux de sortie des portes II3 et II4, qui reçoivent, côté entrée, le potentiel nul (GND) et le potentiel de la tension d'alimentation (VDD) et qui sont raccordés, côté sortie, au signal de sortie $\overline{C_{out}}$

f) les transistors de transfert II7, II7', II8, II8' ne font pas partie d'une porte combinatoire à l'intérieur du montage.